# EUROPÄISCHE PATENTSCHRIFT

(11) **EP 3 252 898 B1**
(45) Veröffentlichungstag und Bekanntmachung des Hinweises auf die Patenterteilung: **21.09.2022**
(21) Anmeldenummer: 17000803.1
(22) Anmeldetag: 09.05.2017
(51) Int. Cl.: H02G 15/04

(54) **VERBINDER UND VERFAHREN ZUM ABDICHTEN EINES VERBINDERS**
CONNECTOR AND METHOD OF SEALING A CONNECTOR
CONNECTEUR ET PROCÉDÉ D'ÉTANCHÉITÉ D'UN CONNECTEUR

(30) Priorität: 01.06.2016 DE 102016006728
(43) Veröffentlichungstag der Anmeldung: 06.12.2017
(73) Patentinhaber: Yamaichi Electronics Deutschland GmbH, 85609 Aschheim-Dornach (DE)
(72) Erfinder: Pannagl, Andreas, 85640 Putzbrunn (DE); Quiter, Michael, 57482 Wenden (DE)
(74) Vertreter: Müller-Boré & Partner Patentanwälte PartG mbB

(56) Entgegenhaltungen:
- EP-A1- 2 741 375
- EP-A2- 0 218 116
- WO-A1-02/067399
- WO-A1-2007/107761
- DE-A1- 2 902 174
- DE-A1- 3 030 401
- DE-A1- 10 011 341
- DE-A1- 10 312 749
- DE-A1-102011 057 064
- US-A1- 2003 085 575

## Beschreibung

Die Erfindung betrifft einen Verbinder, insbesondere einen Push-Pull-Verbinder, sowie ein Verfahren zum Abdichten eines Verbinders.

Bisherige Verbinder, insbesondere Push-Pull-Verbinder, weisen eine begrenzte Schutzwirkung gegen von außen eindringende Flüssigkeiten und/oder eindringenden Staub auf. Insbesondere erfüllen bekannte Verbinder und/oder Push-Pull-Verbinder nicht die Schutznormen IP67, IP68, und IP69K.

In bekannten Verbindern ist ein Dichtungselement, z.B. ein Stück Gummi und/oder ein Gummischlauch oder Ähnliches, zwischen einem im Verbinder angeordnetem Kabel und einem Gehäuseteil des Verbinders angeordnet. Das Dichtungselement wird durch das Gehäuseteil gegenüber dem Kabel gequetscht, wobei jeweils zwischen dem Dichtungselement und dem Kabel und/oder dem Gehäuseteil Dichtflächen ausgebildet sind. Die derart ausgebildeten Dichtflächen weisen allerdings nur eine geringe Kontaktfläche auf, so dass eine zuverlässige Abdichtung des Verbinders gegenüber Flüssigkeiten und/oder Staub nicht gewährleistet ist. So kann es beim Bewegen des Kabels relativ zum Verbinder zur Bildung von Kanälen zwischen dem Dichtungselement und dem Kabel und/oder dem Dichtungselement und dem Gehäuseteil kommen. Durch derartige Kanäle kann eine Flüssigkeit und/oder Staub in den Verbinder eindringen.

Ferner zeigt die DE 103 12 749 A1 eine Verschraubung für abgedichtete Leitungsdurchführungen mit einem Doppelnippel, einer auf diesen aufschraubbaren Druckschraube mit axialer Durchgangsöffnung sowie einem zwischen Doppelnippel und Druckschraube eingefügten ringartigen Klemmring und Dichteinsatz, wobei eine Leitung durch die Teile hindurchführbar ist und der Klemmring von den miteinander verschraubten Teilen Doppelnippel und Druckschraube nach radial innen verformbar ist, so dass eine Zugentlastung und eine Abdichtung der Leitung erfolgt.

DE 10 2011 057064 A1 zeigt eine Kabelverschraubung mit einem im Wesentlichen hohlzylinderförmigen Dichtungselement, einem im Wesentlichen hohlzylinderförmigen Klemmkorb, welcher ein im Wesentlichen ringförmig ausgebildetes Grundelement aufweist, an welchem mehrere nach radial innen bewegbare Klemmlamellen angeordnet sind, und einem Druckelement, wobei der Klemmkorb mit seinem Grundelement auf einer Außenumfangsfläche des Dichtungselementes geklemmt ist, und wobei an einem freien Ende der Klemmlamellen jeweils eine im Wesentlichen parallel zu einem Mantel eines in die Kabelverschraubung eingeführten Kabels ausgebildete Anschlagsfläche zur Auflage auf dem Mantel des eingeführten Kabels ausgebildet ist, wobei in der Anschlagsfläche ein nach radial innen gerichteter Rasthaken ausgebildet ist, welcher in den Mantel des eingeführten Kabels einhakbar ist.

DE 29 02 174 A1 zeigt eine Befestigungsvorrichtung mit einem hohlen zylindrischen Körper, um dessen äußeren Umfang ein Außengewinde gebildet ist, und mit einem Klemmrohr, um dessen innere Umfangsfläche ein Innengewinde vorgesehen ist, welches mit dem Außengewinde des zylindrischen Körpers in Eingriff bringbar ist, wobei der zylindrische Körper eine Mehrzahl von ringförmig angeordneter, unabhängigen Greifstücken aufweist, die von einem Ende des Körpers herausragen und gekerbte Teile aufweisen, welche um innere Umfangsfläche ihrer Teile mit Ausnahme des oberer Endteils zur Bildung elastischer Schenkelteile gebildet sind, welche ein Packungsrohr aufnehmen, das in-dem gekerbten Teil der Stücke eingepasst ist, dass die Greifstücke um den äußeren Umfang am oberen Endteil desselben eine Einrichtung zum Anhalten oder für den Anschlag und für die Festlegung des Klemmrohres in Richtung entgegengesetzt zur Vorlaufrichtung des Außengewindes des zylindrischen Körpers hat, dass das Klemmrohr um den inneren Umfang seines einen Endteiles ein verjüngtes Teil ausgebildet aufweist, gegen welches der äußere Umfang des oberen Endteils jedes Greifstückes anstößt, und an dem verjüngten Teil Einrichtungen aufweist, die mit den Greifstücken in Eingriff bringbar sind, dass das Klemmrohr vom oberen Ende der Greifstücke des zylindrischen Körpers her aufgebracht und mit dem zylindrischen Körper in Gewindeeingriff gebracht wird, wobei die oberen Endteile der Greifstücke radial gegen die Mitte der Befestigungsvorrichtung derart gedrückt sind, dass eine Deformation des Packungsrohres unter Verminderung seiner Durchmessergröße hervorgerufen wird.

EP 0 218 116 A2 zeigt eine Kabelverschraubung bestehend aus einem Zwischenstutzen mit zugeordnetem Dichtungskörper und einer Hutmutter bzw. Druckschraube. Dabei sind am hohlzylindrischen Zwischenstutzen durch Schlitze voneinander getrennte Zungen koaxial angeordnet, die beim Betätigen der Hutmutter den Dichtungskörper gegen die Umfangsfläche des eingeführten Kabels pressen, um so die gewünschte Abdichtung bzw. Zugentlastung zu erreichen. Es ist vorgesehen, die Breite der Zungen des Zwischenstutzens vom Fuß der Zunge in Richtung auf das freie Ende hin abnehmen zu lassen. Dabei sollen einige der Zungen an ihrem Freien Ende einen quer zu ihrer Längserstreckung verlaufenden Klemmbereich aufweisen, dessen Längenabmessungen die Breite der Zunge am freien Ende übersteigt.

US 2003/085575 A1 zeigt eine Vorrichtung zum axialen Festhalten eines zylindrischen Elementes und insbesondere eines Kabels mit einer Buchse mit einem Außengewinde, die sich in axialer Richtung durch Klemmplatten und eine Überlappungsmutter erstreckt, wobei die Überlappungsmutter im Inneren eine geschrumpfte Druckfläche aufweist, die dazu bestimmt ist, auf die Enden der Klemmplatten der Fassung einzuwirken und diese radial in Richtung auf das vorher in die Fassung eingesetzte zylindrische Element zu verformen.

WO 02/067399 A1 zeigt eine Kabelverschraubungsanordnung zur Abdichtung zwischen einem Kabel und einer Wand, durch welche das Kabel verläuft, wobei die Anordnung einen Dichtmechanismus aufweist, welcher eine Dichtbuchse und eine Dichtbuchsendrückeinrichtung umfasst, welche bei Relativbewegung von zwei Teilen der Anordnung gepresst wird, um die Dichtbuchse in einer Dichtrichtung zu drücken.

EP 2 741 375 A1 bezieht sich auf eine Dichtungsvorrichtung, insbesondere für einen Verbinder, aufweisend eine Kabeldurchführöffnung, durch welche ein Kabel entlang einer Kabeldurchführrichtung durchführbar oder durchgeführt ist, einen Dichtbereich, der mit einem komplementären Dichtbereich eines Verbinders kontaktierbar ist, zumindest ein dehnbares Haftvermittlungselement, welches an der Mantelfläche der Dichtungsvorrichtung angeordnet ist und welches eine Öffnung zu einem Fluidreservoir abdeckt, zumindest einen Fluidkanal, durch welchen ein Fluid entlang der Kabeldurchführrichtung zu dem Fluidreservoir fließen kann, wobei das Haftvermittlungselement durch das Beaufschlagen des Fluidreservoirs mit einem Fluid eines vorbestimmten Drucks derart dehnbar und/oder zumindest bereichsweise verlagerbar ist, daß der Durchmesser der Dichtungsvorrichtung im Bereich des Haftvermittlungselements vergrößerbar ist.

DE 30 30 401 A1 zeigt einen flüssigkeitsdichten Verbinder zum Verbinden eines ummantelten, flexiblen, metallummantelten Kabels mit einem elektrischen Gehäuse mit einem durchgehenden Erdungspfad zwischen der Ummantelung und dem Gehäuse. Der Verbinder weist einen Dichtungsring auf, dem ein Erdungsring hinzugefügt, die wirksam dazu dienen, den Kabelmantel bzw. die Metallummantelung zu ergreifen.

WO 2007/107761 A1 zeigt eine Kabelverschraubung zum Festklemmen eines Kabels zum Koppeln mit einem Elektrikgehäuse oder einer Funktionsbox. Die Kabelverschraubung hat einen Hauptkörper mit einem integrierten Dichtungselement an einem Ende und eine Mutter zum Anziehen den Hauptkörper und ein Klemmelement. Das Klemmelement passt in den Hauptkörper, um das Dichtungselement zusammenzudrücken, wenn die Mutter am Hauptkörper festgezogen wird. Das Zusammendrücken des Dichtungselements bewirkt, dass sich dasselbe zusammenballt, wodurch eine wirksame Klemme und Abdichtung um ein Kabel erzeugt wird.

DE 100 11 341 A1 betrifft einen eine elektrische Steckvorrichtung, mit einem Steckergehäuse zur Aufnahme einer Steckdose und/oder eines Steckers, und mit einer Klemmvorrichtung mit Klemmkorb als Zugentlastung für zumindest ein in das Steckergehäuse eingeführtes Kabel.

Es ist daher eine Aufgabe der Erfindung einen Verbinder bereitzustellen, welcher gegen eindringenden Staub und/oder eindringende Flüssigkeiten geschützt ist.

Diese Aufgabe wird durch die Gegenstände der unabhängigen Ansprüche gelöst. Bevorzugte Ausführungsformen sind in den abhängigen Ansprüchen definiert.

Die Erfindung betrifft einen Verbinder, insbesondere einen Push-Pull-Verbinder, umfassend:
- eine Kabeldurchführung zum Aufnehmen eines Kabelendes; und
- ein erstes Dichtungselement, welches zumindest teilweise zwischen dem Kabelende und der Kabeldurchführung angeordnet ist,
wobei an der Kabeldurchführung eine Mehrzahl von relativ zum Kabelende bewegbaren Druckelementen angeordnet ist, die in eine Befestigungsposition bewegbar sind, in der das erste Dichtungselement von der Mehrzahl von Druckelementen an das Kabelende gedrückt ist.

Die Kabeldurchführung kann eine im Wesentlichen hohlzylindrische Form aufweisen. Das heißt, die Kabeldurchführung weist einen Innendurchmesser und einen Außendurchmesser auf, wobei die Differenz zwischen Außendurchmesser und Innendurchmesser die Wandung und/oder die Wandstärke der Kabeldurchführung definiert. Des Weiteren kann die Kabeldurchführung eine erste Öffnung und eine zweite Öffnung aufweisen, welche derart ausgebildet sind, dass ein Kabel und/oder Kabelende in die Kabeldurchführung entlang der Zylinderachse der Kabeldurchführung einführbar bzw. ausführbar bzw. durchführbar ist. Dabei kann die erste Öffnung der zweiten Öffnung gegenüberliegend angeordnet sein, so dass die im Wesentlichen hohlzylindrische Wandung sich von der ersten Öffnung in Richtung zweite Öffnung erstreckt.

Der Innendurchmesser der Kabeldurchführung kann größer ausgebildet sein als der Außendurchmesser des aufgenommenen Kabels und/oder Kabelendes, um eine Aufnahme des Kabels und/oder des Kabelendes in die Kabeldurchführung zu ermöglichen. Das Kabelende kann entlang einer Kabelführungsrichtung in die Kabeldurchführung eingeführt sein. Als Kabelführungsrichtung kann die Richtung angesehen werden, in welche sich der Verbinder ausgehend von der Kabeldurchführung in Richtung eines Verbindungsbereichs des Verbinders erstreckt. Der Verbindungsbereich des Verbinders kann dazu ausgebildet sein, mit einer komplementären Steckerbuchse verbunden zu werden. Mit anderen Worten ist die Kabelführungsrichtung die Richtung, welche sich von einem kabelseitigen Ende des Verbinders hin zu einem steckerseitigen Ende des Verbinders erstreckt. Anders ausgedrückt, die Kabelführungsrichtung erstreckt sich von einem ersten Bereich des Verbinders, welcher dazu ausgebildet ist, das Kabel und/oder Kabelende einzuführen, hin zu einem zweiten Bereich, der mit einer komplementären Steckerbuchse verbindbar ausgebildet ist. Die Zylinderachse der Kabeldurchführung kann im Wesentlichen parallel zur Kabelführungsrichtung ausgebildet sein. Mit anderen Worten, die Kabeldurchführung kann sich ausgehend von der ersten Öffnung entlang der Kabelführungsrichtung hin zur zweiten Öffnung erstrecken. Darüber hinaus kann der Innendurchmesser und/oder Außendurchmesser der Kabeldurchführung entlang der Kabelführungsrichtung variieren.

Das zumindest teilweise zwischen dem Kabelende und der Kabeldurchführung angeordnete erste Dichtungselement kann eine im Wesentlichen hohlzylindrische und/oder rotationszylindrische Form aufweisen und in Kabelführungsrichtung länglich ausgebildet sein. Mit anderen Worten, die Zylinder- und/oder die Rotationsachse des ersten Dichtungselements kann im Wesentlichen parallel zur Kabelführungsrichtung ausgebildet sein. Das erste Dichtungselement kann dazu ausgebildet sein, einen Innendurchmesser aufzuweisen, der dazu geeignet ist, das Kabel und/oder Kabelende aufzunehmen. Mit anderen Worten, der Innendurchmesser des ersten Dichtungselements kann zumindest teilweise größer als der Außendurchmesser des aufgenommenen Kabels und/oder Kabelendes ausgebildet sein.

Des Weiteren weist das Dichtungselement einen Außendurchmesser auf, der dazu geeignet ist, das Dichtungselement in der Kabeldurchführung zu verorten, wobei der Außendurchmesser des Dichtungselements entlang der Kabelführungsrichtung variabel ausgebildet sein kann. Mit anderen Worten, der Außendurchmesser des Dichtungselements kann sich entlang der Kabelführungsrichtung verändern.

Die bewegbaren Druckelemente können länglich ausgebildet sein und sich ausgehend von der Kabeldurchführung entgegen der Kabelführungsrichtung erstrecken. Mit anderen Worten, die bewegbaren Druckelemente können sich von einem kabelseitigen Ende der Kabeldurchführung entgegen der Kabelführungsrichtung erstrecken. Die bewegbaren Druckelemente können sich bezüglich der Zylinderachse der Kabeldurchführung gegenüberliegend angeordnet sein. Mit anderen Worten, die bewegbaren Druckelemente können um das aufgenommene Kabel und/oder Kabelende radial angeordnet sein.

Das erste Dichtungselement ist zumindest teilweise zwischen der Mehrzahl von bewegbaren Druckelementen und dem aufgenommenen Kabel und/oder Kabelende angeordnet. Durch Bewegen der bewegbaren Druckelemente relativ zum Kabel und/oder Kabelende, kann der Abstand zwischen den bewegbaren Druckelementen und dem Kabel und/oder Kabelende verkleinert bzw. vergrößert werden. Mit anderen Worten, durch Bewegen der bewegbaren Druckelemente relativ zum Kabel und/oder Kabelende, kann sich eine Öffnung, welche um die bewegbaren Druckelemente orthogonal zur Kabelführungsrichtung angeordnet ist, verkleinern oder vergrößern. Insbesondere in der Befestigungsposition, also in einem Zustand in dem das Kabel und/oder Kabelende in dem Verbinder befestigt ist, ist der Querschnitt der durch die bewegbaren Druckelemente definierten Öffnung kleiner als in einem unbefestigten Zustand des Kabels und/oder des Kabelendes. Dadurch können die bewegbaren Druckelemente in der Befestigungsposition das erste Dichtungselement gegen das aufgenommenen Kabel- und/oder Kabelende drücken. Das entlang der Kabelführungsrichtung länglich ausgebildete erste Dichtungselement dichtet somit den Zwischenraum zwischen der Innenseite der Kabeldurchführung und dem aufgenommenen Kabel und/oder Kabelende ab. Das erste Dichtungselement bildet sowohl an seiner Innenseite als auch an seiner Außenseite eine große Dichtfläche. Durch diese in der Befestigungsposition ausgebildete Dichtfläche kann ein Eindringen von Flüssigkeiten und/oder Staub in den Verbinder von außerhalb verhindert werden.

Insbesondere können die bewegbaren Druckelement als Fortsatz an der Kabeldurchführung elastisch verformbar ausgebildet sein. Mit anderen Worten, die Kabeldurchführung und die bewegbaren Druckelemente können einstückig ausgebildet sein. Des Weiteren können die Kabeldurchführung und/oder die bewegbaren Druckelemente aus Kunststoff und/oder aus einer CuZn Legierung, insbesondere einer CuZn₃₉Pb₃ Legierung gefertigt sein. Aufgrund des Bleigehaltes ist eine solche Legierung sehr gut für eine spannende Bearbeitung geeignet. Vorzugsweise kann der Verbinder ein Sicherungselement zum Bewegen der bewegbaren Druckelemente in die Befestigungsposition umfassen. Insbesondere kann das Sicherungselement derart verbindbar mit dem Verbinder ausgebildet sein, dass die bewegbaren Druckelemente automatisch in die Befestigungsposition bewegt werden, wenn das Sicherungselement mit dem Verbinder verbunden wird.

Das Sicherungselement kann an einem Anordnungsbereich, welcher an dem kabelseitigen Ende des Verbinders vorgesehenen ist, ausgebildet sein. Insbesondere, kann das Sicherungselement verschraubbar mit dem Verbinder ausgebildet sein. Beim Verschrauben des Sicherungselements am kabelseitigen Ende des Verbinders wird das Sicherungselement entlang der Kabelführungsrichtung hin zum steckerseitigen Ende des Verbinders bewegt. Durch das Bewegen des Sicherungselements in Kabelführungsrichtung hin zum steckerseitigen Ende des Verbinders werden die bewegbaren Druckelemente zum Kabel und/oder Kabelende hin bewegt. Dazu kann das Sicherungselement eine sich verengende innere Fläche, also einen sich in Kabelführungsrichtung vergrößernden Innendurchmesser aufweisen, die in Kontakt mit dem äußeren Umfang der bewegbaren Druckelemente steht.

Im Rahmen der Erfindung bedeutet "innen" auch "radial innen" und "außen" auch "radial außen", wobei sich der Begriff "radial" auf eine Richtung bezieht, die radial von der Kabelführungsrichtung weg weist.

Vorzugsweise kann das erste Dichtungselement einen Vorsprung aufweisen, wobei der Vorsprung in eine komplementäre Aussparung der bewegbaren Druckelemente eingreift.

Der Vorsprung des ersten Dichtungselements kann insbesondere an der Außenseite, d.h. der dem Kabel und/oder Kabelende abgewandten Seite, am kabelseitigen Ende des ersten Dichtungselements angeordnet sein. Insbesondere kann der Vorsprung von der Außenseite des ersten Dichtungselements radial nach außen verlaufend ausgebildet sein.

Dahingegen kann die komplementäre Aussparung in der Mehrzahl von bewegbaren Druckelementen auf der Innenseite, d.h. der dem Kabel und/oder Kabelende zugewandten Seite, der bewegbaren Druckelemente angeordnet sein.

Das Eingreifen des Vorsprungs des ersten Dichtungselements in die komplementäre Aussparung der bewegbaren Druckelemente kann eine verbesserte Kraftübertragung ermöglichen, wenn die bewegbaren Druckelemente in Richtung Befestigungsposition bewegt werden. Insbesondere kann das Dichtungselement flächig, d.h. mit der Innenseite des ersten Dichtungselements, an das Kabel und/oder Kabelende gedrückt werden. Des Weiteren kann das erste Dichtungselement zugleich in Kabelführungsrichtung gedrückt und/oder gestaucht werden.

Vorzugsweise kann das erste Dichtungselement in der Kabelführungsrichtung, in der das Kabelende durch die Kabeldurchführung geführt ist, um einen Teilbereich des Kabelendes herum zwischen 3 mm und 10 mm lang, bevorzugt zumindest 4,2 mm lang ausgebildet sein. Jedoch kann das erste Dichtungselement auch kürzer ausgebildet sein, so lange die entsprechende Dichtheit gewährleistet ist.

Durch die längliche Ausbildung des Dichtungselements in Kabelführungsrichtung kann gewährleistet werden, dass eine entsprechend große Dichtfläche zwischen dem ersten Dichtungselement und dem Kabel und/oder Kabelende ausgebildet wird. Somit kann in einer Befestigungsposition das Kabel und/oder das Kabelende durch das Dichtungselement staub- und/oder flüssigkeitsdicht abgedichtet werden.

Des Weiteren kann das Kabel und/oder Kabelende innerhalb der Kabeldurchführung derart angeordnet sein, dass das Kabel und/oder Kabelende relativ zur Kabeldurchführung in Kabelführungsrichtung übersteht. Insbesondere kann das Kabel und/oder Kabelende zwischen 0,1 mm und 10 mm besonders bevorzugt zwischen 0,5 mm und 6 mm überstehen.

Der Innendurchmesser des ersten Dichtungselements verkleinert sich zumindest abschnittsweise in Kabelführungsrichtung, wenn die Mehrzahl von Druckelementen nicht in die Befestigungsposition bewegt wurde. Durch den sich verkleinernden Innendurchmesser des ersten Dichtungselements entlang der Kabelführungsrichtung, kann das Kabel und/oder Kabelende einfach in den Verbinder aufgenommen werden, da bei der Kabelaufnahme nur eine kleine Fläche der Innenseite des ersten Dichtungselements mit dem aufgenommenen Kabel und/oder Kabelende in Kontakt steht.

Beim Einnehmen der Befestigungsposition wird durch die Bewegungen der bewegbaren Druckelemente hin zum Kabelende die Innenseite des ersten Dichtungselements an dem oder den Abschnitten mit verbreitertem Innendurchmesser hin zum Kabelende gedrückt. Somit weist in der Befestigungsposition das erste Dichtungselement entlang der Kabelführungsrichtung einen im Wesentlichen gleichbleibenden Innendurchmesser auf, wobei der Innendurchmesser im Wesentlichen dem Außendurchmesser des aufgenommenen Kabels und/oder Kabelendes entspricht. D.h. die Innenseite des ersten Dichtungselements liegt im Wesentlichen (voll-)flächig an der Außenseite des aufgenommenen Kabels und/oder Kabelendes an.

Vorzugsweise kann die Kabeldurchführung des Verbinders eine Verengung aufweisen, wobei das erste Dichtungselement an der Verengung angeordnet ist.

Die Verengung der Kabeldurchführung kann auf der Innenseite der Kabeldurchführung in Kabelführungsrichtung ausgebildet sein. Die Verengung kann insbesondere als eine abrupte und/oder stufenförmige Verkleinerung des Innendurchmessers der Kabeldurchführung in Kabelführungsrichtung ausgebildet sein. Des Weiteren kann ein steckerseitiges Ende des ersten Dichtungselements an der Verengung angeordnet sein, wobei der Außendurchmesser des ersten Dichtungselements größer ist als der Innendurchmesser der Verengung. Dabei kann eine Stirnfläche des ersten Dichtungselements, welche am steckerseitigen Ende des ersten Dichtungselements ausgebildet ist, flächig an der Verengung anliegen. Beim Bewegen der bewegbaren Druckelemente in die Befestigungsposition kann somit das erste Dichtungselement, insbesondere die Stirnfläche des ersten Dichtungselements, an die Verengung gedrückt werden. Somit werden zwei weitere Dichtflächen ausgebildet. Eine erste Dichtfläche ist an der Verengung angeordnet, welche orthogonal zur Kabelführungsrichtung und radial nach außen verläuft. Die zweite Dichtfläche ist zwischen der Kabeldurchführung und dem ersten Dichtungselement parallel zur Kabelführungsrichtung angeordnet. Beim Einnehmen der Befestigungsposition werden diese Dichtflächen staub- und/oder flüssigkeitsdicht abgedichtet.

Vorzugsweise kann die Mehrzahl der Druckelemente klauenförmig und oder "L"-förmig ausgebildet sein, wobei sich die klauenförmig ausgebildeten Druckelemente ausgehend von der Kabeldurchführung entgegen der Kabelführungsrichtung erstrecken.

Insbesondere kann zwischen zwei benachbarten Druckelementen eine Aussparung vorgesehen sein, welche die benachbarten Druckelemente voneinander beabstandet. Dabei können die Druckelemente radial um das aufgenommene Kabel und/oder Kabelende angeordnet sein. Des Weiteren kann das erste Dichtungselement in den (klauenförmigen) Druckelementen aufgenommen und/oder gehalten bzw. angeordnet sein.

Vorzugsweise kann der Verbinder ein Gehäuse umfassen, wobei die Kabeldurchführung innerhalb des Gehäuses angeordnet ist. Des Weiteren kann der Verbinder ein zweites Dichtungselement umfassen, welches zwischen der Kabeldurchführung und dem Gehäuse angeordnet ist.

Das Gehäuse kann im Wesentlichen hohlzylindrisch ausgebildet sein und einen Innendurchmesser aufweisen, der dazu geeignet ist, die Kabeldurchführung aufzunehmen. Die hohlzylindrische Form des Gehäuses kann sich entlang der Kabelführungsrichtung erstrecken, wobei das Gehäuse ein kabelseitiges Ende und ein steckerseitiges Ende aufweist.

Das zweite Dichtungselement kann dazu ausgebildet sein, den Verbinder gegen Flüssigkeiten und/oder Staub abzudichten.

Dazu kann der Verbinder an der Außenseite der Kabeldurchführung eine umlaufende Aussparung aufweisen, in der das zweite Dichtungselement angeordnet ist. Die Aussparung kann insbesondere radial an der Außenseite der Kabeldurchführung ausgebildet sein. Durch eine derartige Anordnung wird beim Assemblieren des Verbinders, das zweite Dichtungselement durch das Gehäuse in die Aussparung gequetscht. Mit anderen Worten, das zweite Dichtungselement kann sich der Form der Aussparung anpassen. Dazu kann das zweite Dichtungselement aus einem gummiartigen flexiblen Material gefertigt sein. Somit entsteht eine vergrößerte Dichtfläche zwischen dem zweiten Dichtungselement und der Aussparung, wodurch die gewünschte Staub- und/oder Flüssigkeitsdichtigkeit erreicht wird. Alternativ oder zusätzlich kann im Gehäuse eine Aussparung für das zweite Dichtungselement ausgebildet sein.

Des Weiteren kann das Sicherungselement dazu ausgebildet sein, mit dem Gehäuse verbindbar und/oder verschraubbar zu sein. Insbesondere kann das Sicherungselement derart verbindbar mit dem Gehäuse ausgebildet sein, dass die Mehrzahl von Druckelementen in die Befestigungsposition bewegt wird.

Das Sicherungselement kann an einem am kabelseitigen Ende des Gehäuses vorgesehenen Anordnungsbereich ausgebildet sein. Beim Verbinden und/oder Verschrauben des Sicherungselements am kabelseitigen Ende des Gehäuses wird das Sicherungselement entlang der Kabelführungsrichtung in Richtung hin zu einem steckerseitigen Ende des Gehäuses und/oder dem steckerseitigen Ende des Verbinders bewegt. Durch das Bewegen des Sicherungselements in Kabelführungsrichtung hin zum steckerseitigen Ende des Verbinders und/oder Gehäuses werden die Mehrzahl von bewegbaren Druckelementen zum Kabel und/oder Kabelende hin bewegt, wodurch die oben beschriebene Abdichtung erreicht wird.

Vorzugsweise kann das zweite Dichtungselement als Dichtungsring ausgebildet sein.

Ein weiterer Aspekt der Erfindung betrifft ein Verfahren zum Abdichten eines Verbinders gemäß Anspruch 11.

### Figurenbeschreibung

Nachfolgend wird eine bevorzugte Ausführungsform des Verbinders anhand der beigefügten Zeichnungen beispielhaft erläutert. Es zeigt:
- Figur 1:: eine perspektivische Ansicht eines montierten Verbinders mit aufgenommenem Kabel,
- Figur 2a:: eine perspektivische Ansicht eines Längsschnitts durch eine Kabeldurchführung,
- Figur 2b:: eine Seitenansicht des Längsschnitts durch die Kabeldurchführung,
- Figur 3a:: eine perspektivische Ansicht eines Längsschnitts durch die Kabeldurchführung mit einem darin angeordnetem Dichtungselement,
- Figur 3b:: eine Seitenansicht des Längsschnitts durch die Kabeldurchführung mit dem innenliegenden Dichtungselement,
- Figur 4a:: eine perspektivische Ansicht eines Längsschnitts durch einen teilmontierten Verbinder, und
- Figur 4b:: eine Seitenansicht eines Längsschnitts durch den teilmontierten Verbinder.

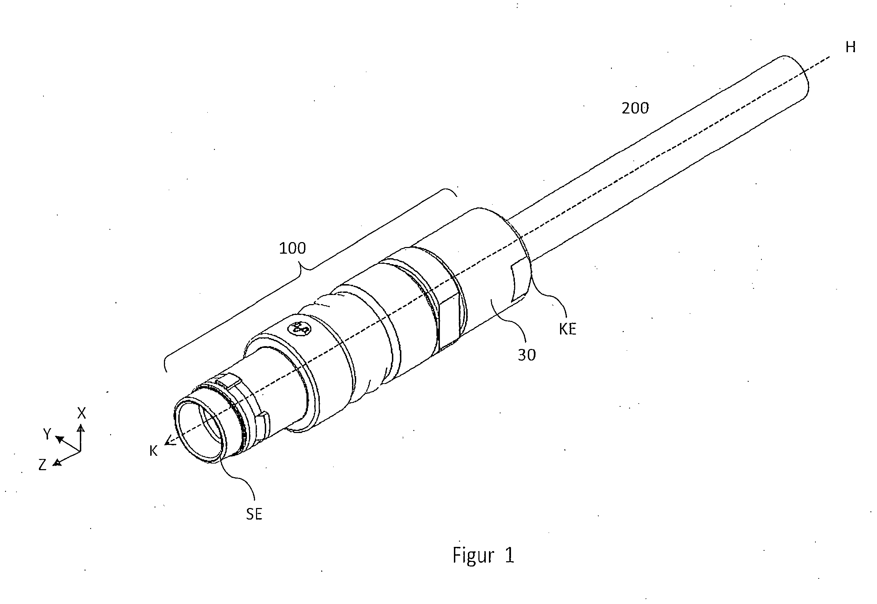

**Figur 1** zeigt eine perspektivische Ansicht eines montierten Verbinders 100, der als Push-Pull-Verbinder ausgebildet ist. Ein kabelseitiges Ende KE des Verbinders 100 ist dazu ausgelegt, ein Kabelende eines Kabels 200 aufzunehmen. Der Verbinder 100 erstreckt sich von seinem kabelseitigen Ende KE entlang einer Kabelführungsrichtung K hin zu einem steckerseitigen Ende SE des Verbinders 100. Am steckerseitigen Ende SE des Verbinders 100 kann eine komplementäre Steckerbuchse vorgesehen sein, wobei der Verbinder 100 mit der komplementäre Steckerbuchse verbindbar ausgebildet sein kann. Die Kabelführungsrichtung K entspricht im Wesentlichen der Richtung, in welcher das Kabelende des Kabels 200 in den Verbinder 100 eingeführt ist und/oder angeordnet ist bzw. der Stromrichtung durch den Verbinder 100. In den Figuren 1-4b entspricht die Kabelführungsrichtung somit im Wesentlichen der Z-Richtung des eingeblendeten Koordinatensystems. Des Weiteren zeigt Figur 1 ein mit dem Verbinder 100 verbindbar ausgebildetes Sicherungselement 30, welches am kabelseitigen Ende KE des Verbinders 100 angeordnet ist.

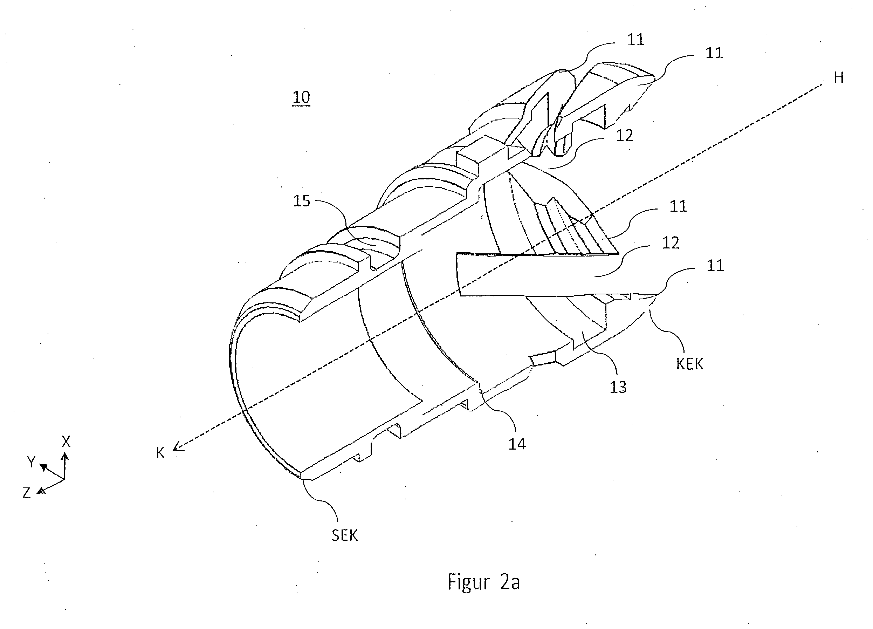

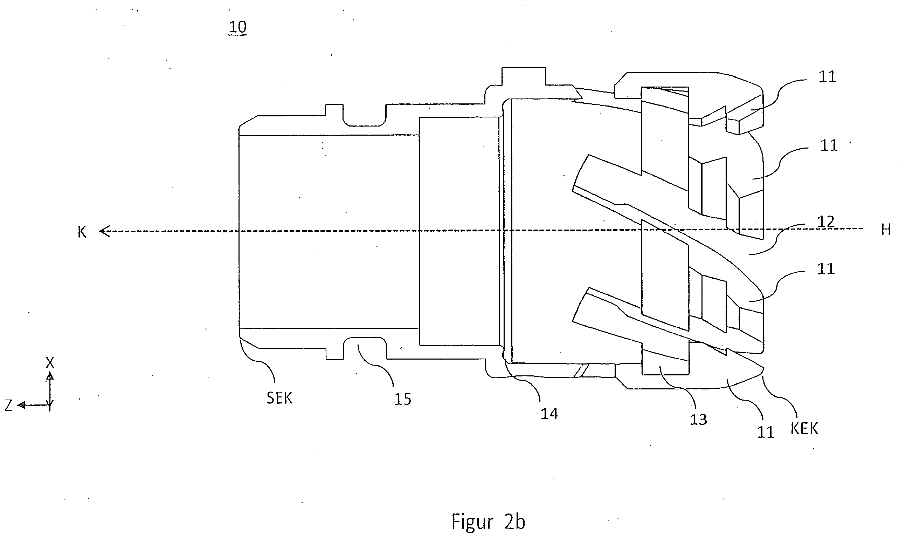

**Figuren 2a** **und** **2b** zeigen jeweils einen Längsschnitt durch eine Kabeldurchführung 10, welche innerhalb des in Figur 1 gezeigten Verbinders 100 angeordnet ist. Die Kabeldurchführung 10 ist im Wesentlichen hohlzylindrisch ausgebildet, wobei die Zylinderachse H im Wesentlichen parallel zur Kabelführungsrichtung K ausgebildet ist. Die Kabeldurchführung 10 erstreckt sich von einem kabelseitigen Ende KEK der Kabeldurchführung 10 entlang der Kabelführungsrichtung K hin zu einem steckeseitigen Ende SEK der Kabeldurchführung 10, wobei das Kabelende des Kabels 200 am kabelseitigen Ende KEK der Kabeldurchführung 10 in selbige eingeführt werden kann.

Die Kabeldurchführung 10 weist entlang der Kabelführungsrichtung sowohl einen variablen Innendurchmesser als auch einen variablen Außendurchmesser auf. Von einem kabelseitigen Ende KEK der Kabeldurchführung 10 erstreckt sich entgegen der Kabelführungsrichtung eine Mehrzahl von bewegbaren Druckelementen 11. Die Mehrzahl von beweglichen Druckelementen 11 kann mindestens zwei, vorzugsweise sechs oder aber auch mehr bewegbare Druckelemente 11 umfassen. Die bewegbaren Druckelemente 11 sind radial um die Zylinderachse H herum angeordnet und sind in Richtung Zylinderachse H hin beweglich ausgebildet. Des Weiteren können die Druckelemente 11 auch nach außen bewegbar, d.h. sich von der Zylinderachse H radial entfernend bewegbar ausgebildet sein. Wie gezeigt sind die Druckelemente 11 länglich und klauenförmig bzw. im Wesentlichen L-förmig ausgebildet und erstrecken sich entgegen der Kabelführungsrichtung. Des Weiteren sind benachbarte Druckelemente 11 jeweils voneinander durch eine Aussparung bzw. Beabstandung 12 beabstandet. Durch Bewegen der Druckelemente 11 hin zur Zylinderachse H und/oder hin zu einem in der Kabeldurchführung 10 angeordneten Kabels 200 und/oder Kabelendes, werden die Aussparungen bzw. Beabstandungen 12 zumindest teilweise verkleinert.

Insbesondere sind die Aussparungen bzw. Beabstandungen 12 relativ zur Zylinderachse H schräg ausgebildet, so dass die Aussparungen bzw. Beabstandungen 12 im Wesentlichen gewindeförmig um die Zylinderachse H herum ausgebildet sind. Somit weisen auch die bewegbaren Druckelemente 11 einen im Wesentlichen gewindeförmigen Verlauf um die Zylinderachse H herum auf.

Vorzugsweise sind die bewegbaren Druckelemente 11 und die Kabeldurchführung 10 einstückig aus dem selben Material, insbesondere als Press,- Druck- und/oder Gießbauteil ausgebildet.

Figuren 2a und 2b zeigen eine Aussparung 13, welche in den Druckelementen 11 ausgebildet ist. Die Aussparung 13 ist im Wesentlichen ringförmig am kabelseitigen Ende der Kabeldurchführung 10 ausgebildet und verläuft an einer Innenseite der bewegbaren Druckelemente 11, d.h. auf einer Seite, welcher der Zylinderachse H zugewandt ist. Des Weiteren durchdringt die Aussparung 13 die Druckelemente 11 teilweise in radialer Richtung nach Außen, d.h. von der Zylinderachse H weg.

Des Weiteren weist die Kabeldurchführung 10 in ihrem Verlauf vom kabelseitigen Ende KE entlang der Kabelführungsrichtung hin zum steckerseitigen Ende SE eine Verengung 14 auf. An der Verengung 14 verkleinert sich der Innendurchmesser der Kabeldurchführung 10 abrupt.

Des Weiteren zeigen Figuren 2a und 2b eine umlaufende Aussparung bzw. Führungsrille 15, welche an der Außenseite der Kabeldurchführung 10, d.h. auf der der Zylinderachse H abgewandten Seite der Kabeldurchführung 10, angeordnet ist. Die umlaufende Aussparung bzw. Führungsrille 15 verläuft auf der Außenseite der Kabeldurchführung 10 voll umfänglich.

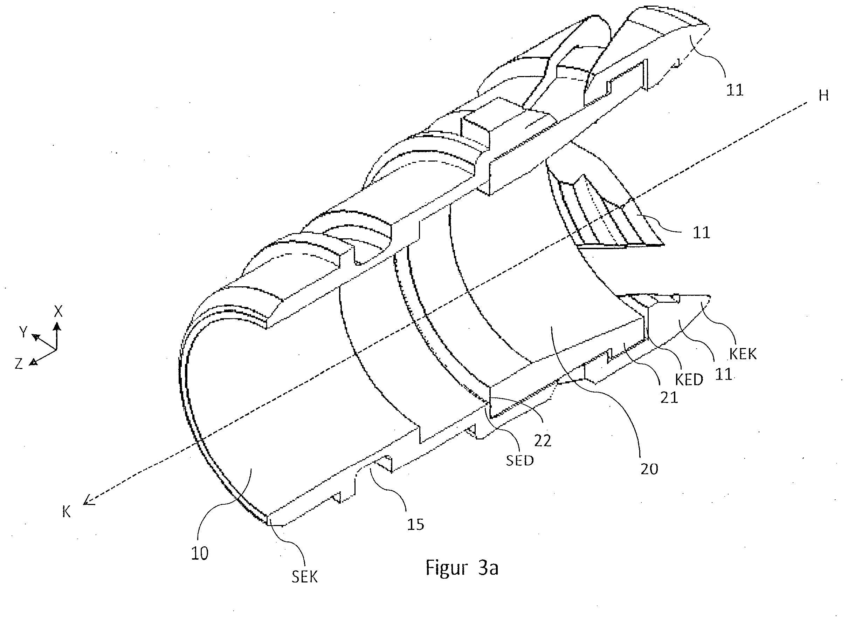

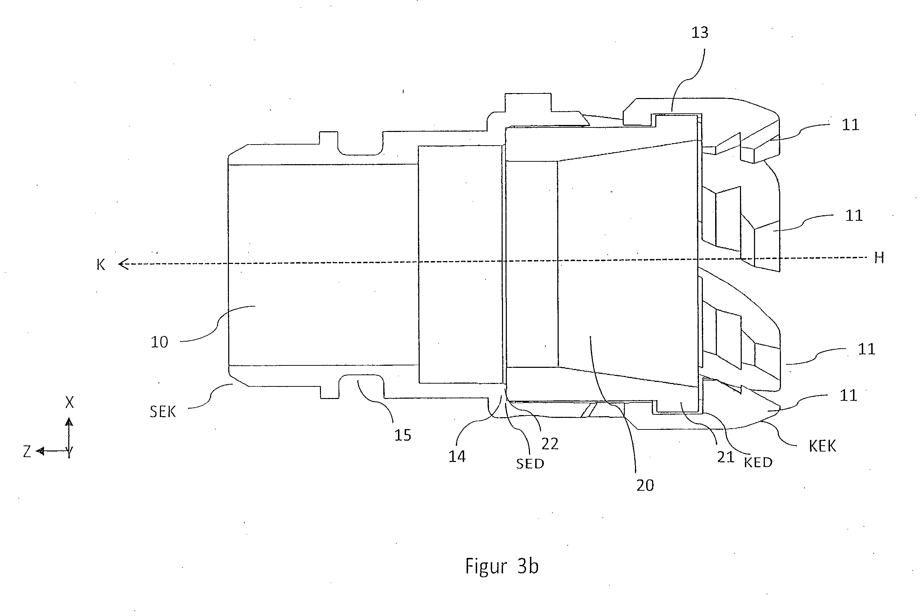

**Figuren 3a** **und** **3b** zeigen einen Längsschnitt durch die Kabeldurchführung 10 entlang der Kabelführungsrichtung K bzw. der Zylinderachse H, wobei innerhalb der Kabeldurchführung 10 ein erstes Dichtungselement 20 angeordnet ist. Das erste Dichtungselement 20 weist eine im Wesentlichen hohlzylindrische Form und/oder rotationssymmetrische Form auf, wobei die Zylinderachse H des ersten Dichtungselements 20 mit der Zylinderachse H der Kabeldurchführung 10 zusammen fällt. Somit ist die Kabelführungsrichtung K im Wesentlichen parallel zur Zylinderachse H des ersten Dichtungselements 20.

An der Außenseite des ersten Dichtungselements 20, d.h. an der der Zylinderachse H abgewandten Seite des ersten Dichtungselements 20, ist am kabelseitigen Ende KED des ersten Dichtungselements 20 ein umlaufender Vorsprung 21 ausgebildet. Es ist vorgesehen, dass der Vorsprung 21 in der Aussparung 13 der Kabeldurchführung angeordnet ist. Der Vorsprung 21 weist stufenartig nach radial außen in die Aussparung 13 hinein.

Ein steckerseitiges Ende SED des ersten Dichtungselements 20 ist an der Verengung 14 angeordnet. Der Außendurchmesser des ersten Dichtungselements 20 ist benachbart zur Verengung 14 größer als der Innendurchmesser der Kabeldurchführung 10 an der Verengung 14 ausgebildet. Somit liegt eine Stirnfläche 22 des ersten Druckelements 20 am steckerseitigen Ende SED des ersten Dichtungselements 20 an der Verengung 14 an.

Somit erstreckt sich das erste Dichtungselement 20 von der Aussparung 13 entlang der Kabelführungsrichtung bis zur Verengung 14, wobei die Außenseite des ersten Dichtungselements 20 im Wesentlichen an der Innenseite der Kabeldurchführung 10 angeordnet ist und/oder somit an der Innenseite der Kabeldurchführung 10 anliegt.

Des Weiteren zeigen Figuren 3a und 3b, dass der Innendurchmesser des ersten Dichtungselements 20 sich abschnittsweise in Kabelführungsrichtung verkleinert.

Beim Bewegen der Druckelemente 11 in die Befestigungsposition, d.h. zur Zylinderachse H hin, wird eine Kraft über die Aussparungen 13 und/oder den Vorsprung 21 auf das erste Dichtungselement 20 ausgeübt werden. Dabei wird die Innenseite des ersten Dichtungselements 20 an ein in der Kabeldurchführung 10 aufgenommenes Kabel 200 und/oder Kabelende angepresst, so dass die Innenseite des ersten Dichtungselements 20 im Wesentlichen parallel zur Zylinderachse H des ersten Dichtungselements 20 ist. Des Weiteren wird das Dichtungselement 20 in Kabelführungsrichtung gedrückt und/oder gestaucht, so dass die Stirnfläche dichtend mit der Verengung 14 abschließt. Des Weiteren dichtet die Außenseite des ersten Dichtungselements 20 zur Innenseite der Kabeldurchführung 10 hin ab.

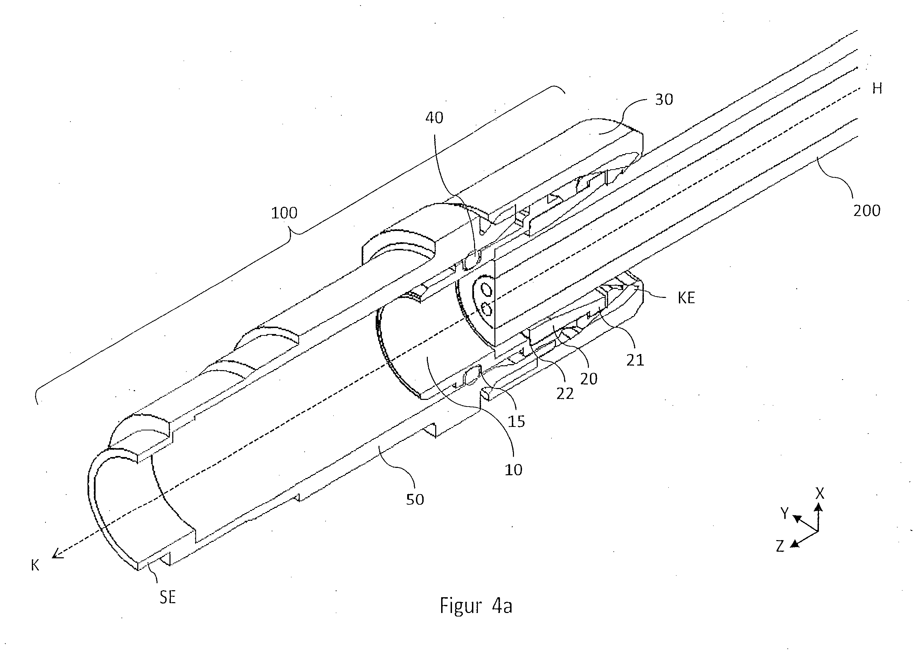

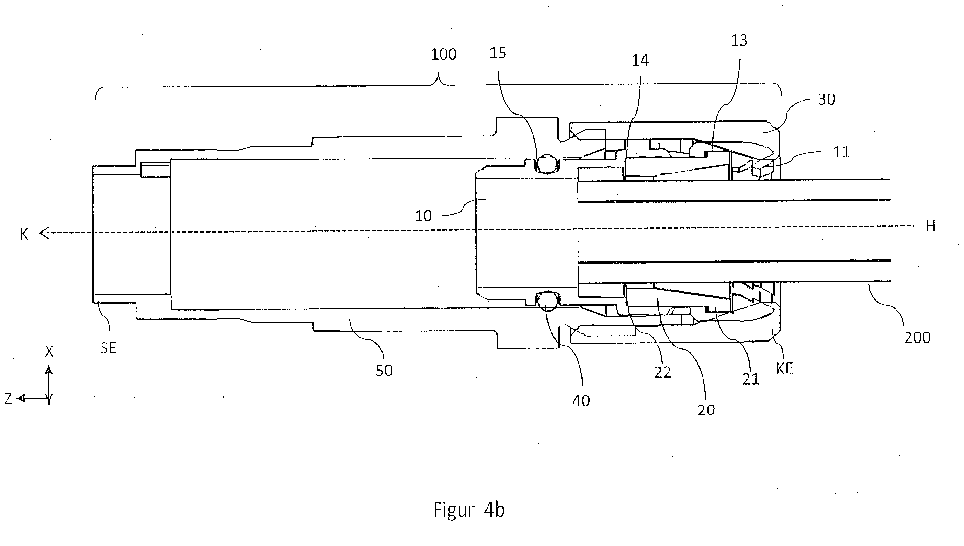

**Figuren 4a** **und** **4b** zeigen jeweils einen Längsschnitt durch einen teilmontierten Verbinder 100 entlang der Kabelführungsrichtung. Im Inneren des Verbinders 100 ist ein Kabelende des Kabels 200 aufgenommen und/oder angeordnet. Im gezeigten Zustand ist das erste Dichtungselement 20 zumindest teilweise zwischen dem aufgenommenen Kabelende des Kabels 200 und der Kabeldurchführung 10 angeordnet.

Darüber hinaus zeigen Figuren 4a und 4b jeweils ein Gehäuseelement 50 des Verbinders 100. Das Gehäuseelement 50 weist im eine Wesentlichen hohlzylindrische Form auf und erstreckt sich entlang der Kabelführungsrichtung K. Eine Zylinderachse H des Gehäuseelements 50 fällt im Wesentlichen mit der Zylinderachse H der Kabeldurchführung 10 zusammen. Die Kabeldurchführung 10 ist innerhalb des Gehäuseelements 50 angeordnet, wobei das Gehäuseelement 50 entlang der Zylinderachse H länger ausgebildet ist als die Kabeldurchführung 10 entlang der Zylindeachse H.

Des Weiteren zeigen Figuren 4a und 4b jeweils das Sicherungselement 30, welches mit dem kabelseitigen Ende KE des Verbinders 100 verbindbar ausgebildet ist. Wie gezeigt, ist das Sicherungselement 30 mit einem kabelseitigen Ende KE des Gehäuseelements 50 verbindbar ausgebildet. Zum Beispiel kann das Sicherungselement 30 mit dem Gehäuseelement 50 verschraubbar ausgebildet sein. Beim Verbinden des Sicherungselements 30 mit dem Gehäuseelement 50 wird das Sicherungselement entlang der Kabelführungsrichtung hin zu einem steckerseitigen Ende SE des Gehäuseelements 50 bewegt. Dabei ist das Sicherungselement 30 derartig ausgebildet, dass es die in dem Sicherungselement 30 angeordnete Mehrzahl von bewegbaren Druckelementen 11 in Richtung hin zum Kabel 200 bewegen kann. Entsprechend wird die Innenseite des ersten Dichtungselements 20 zum Kabel 200 hin bewegt und/oder gedrückt, wobei die Innenseite des ersten Dichtungselements 20 und der durch das erste Dichtungselement 20 umfasste Bereich des Kabels 200 gegen von außen eindringende Flüssigkeiten und/oder Staub abgedichtet ist.

Des Weiteren zeigen Figuren 4a und 4b ein zweites Dichtungselement 40, welches zwischen dem Gehäuseelement 50 und der Kabeldurchführung 10 angeordnet ist. Das zweite Dichtungselement 40 ist umlaufend an der Außenseite der Kabeldurchführung 10 angeordnet und kann zum Beispiel als Dichtungsring ausgebildet sein. Wie gezeigt ist das zweite Dichtungselement 40 in der umlaufenden Aussparung 15 der Kabeldurchführung 10 angeordnet. Im montierten Zustand des Verbinders 100 quetscht und/oder drückt das Gehäuseelement 50 das zweite Dichtungselement 40 in die Aussparung 15, so dass das zweite Dichtungselement 40 formschlüssig in der Aussparung 15 angeordnet ist. Dadurch wird das Gehäuseelement 50 gegenüber der Kabeldurchführung flüssigkeits- und/oder staubdicht abgedichtet.

### Bezugszeichenliste

- 100: Verbinder
- 200: Kabel und/oder Kabelende
- 10: Kabeldurchführung
- 11: bewegbare Druckelemente
- 12: Aussparung bzw. Beabstandung
- 13: komplementäre Aussparung
- 14: Verengung
- 15: umlaufende Aussparung/Führungsrille
- 20: erstes Dichtungselement
- 21: Vorsprung
- 22: Stirnfläche steckerseitiges Ende
- 30: Sicherungselement
- 40: zweites Dichtungselement
- 50: Gehäuselement
- KE: kabelseitiges Ende
- SE: steckerseitiges Ende
- H: Zylinderachse
- K: Kabelfürungsrichtung
- KEK: kabelseitiges Ende Kabeldurchführung
- SEK: steckerseitiges Ende Kabeldurchführung
- KED: kabelseitiges Ende erstes Dichtungselement
- SED: steckerseitiges Ende zweites Dichtungselement

## Patentansprüche

1. Verbinder (100), insbesondere ein Push-Pull-Verbinder, umfassend:
- eine Kabeldurchführung (10) zum Aufnehmen eines Kabelendes (200); und
- ein erstes Dichtungselement (20), welches zumindest teilweise zwischen dem Kabelende (200) und der Kabeldurchführung (10) angeordnet ist,
wobei an der Kabeldurchführung (10) eine Mehrzahl von relativ zum Kabelende (200) bewegbaren Druckelementen (11) angeordnet ist, die in eine Befestigungsposition bewegbar ist, in der die Innenseite des ersten Dichtungselements (20) von der Mehrzahl von Druckelementen (11) flächig an die Außenseite des Kabelendes (200) gedrückt ist, und
wobei ein Innendurchmesser des ersten Dichtungselements (20) sich zumindest abschnittsweise in Kabelführungsrichtung (K) verkleinert, wenn die Mehrzahl von Druckelementen nicht in die Befestigungsposition bewegt ist, und wobei die Kabelführungsrichtung (K) einer Richtung entspricht, in welcher sich der Verbinder ausgehend von der Kabeldurchführung (10) in Richtung eines Verbindungsbereichs des Verbinders erstreckt,
wobei beim Einnehmen der Befestigungsposition durch Bewegen der bewegbaren Druckelemente (11) hin zum Kabelende, die Innenseite des ersten Dichtungselements (20) an dem oder den Abschnitten mit verbreitertem Innendurchmesser hin zum Kabelende (200) gedrückt werden kann.

2. Verbinder (100) gemäß Anspruch 1, weiter umfassend ein Sicherungselement (30) zum Bewegen der Mehrzahl von Druckelementen (11) in die Befestigungsposition.

3. Verbinder (100) gemäß Anspruch 2, wobei das Sicherungselement (30) so mit dem Verbinder (100) verbindbar ist, dass die Mehrzahl von Druckelementen (11) in die Befestigungsposition bewegt wird.

4. Verbinder (100) gemäß einem der vorhergehenden Ansprüche, wobei das erste Dichtungselement (20) einen Vorsprung (21) aufweist und der Vorsprung (21) in eine komplementäre Aussparung (13) der Mehrzahl von bewegbaren Druckelementen (11) eingreift.

5. Verbinder (100) gemäß einem der vorhergehenden Ansprüche, wobei das erste Dichtungselement (20) in eine Kabelführungsrichtung (K), in der das Kabelende (200) durch die Kabeldurchführung (10) geführt ist, um einen Teilbereich des Kabelendes (200) herum zumindest 5mm lang ausgebildet ist.

6. Verbinder (100) gemäß einem der vorhergehenden Ansprüche, wobei die Kabeldurchführung (10) eine Verengung (14) aufweist und wobei das erste Dichtungselement (20) an der Verengung (14) angeordnet ist.

7. Verbinder (100) gemäß einem der vorhergehenden Ansprüche, wobei die Mehrzahl der Druckelemente (11) klauenförmig ausgebildet ist und sich ausgehend von der Kabeldurchführung (10) entgegen der Kabelführungsrichtung (K) erstrecken.

8. Verbinder (100) gemäß einem der vorhergehenden Ansprüche, weiter umfassend:
- ein Gehäuse (50), wobei die Kabeldurchführung (10) innerhalb des Gehäuses (50) angeordnet ist; und
- ein zweites Dichtungselement (40), welches zwischen der Kabeldurchführung (10) und dem Gehäuse (50) angeordnet ist.

9. Verbinder (100) gemäß Anspruch 8, wobei die Kabeldurchführung eine umlaufende Aussparung (15) aufweist, und
wobei das zweite Dichtungselement (40) in der umlaufenden Aussparung (15) der Kabeldurchführung (10) angeordnet ist.

10. Verbinder (100) gemäß Anspruch 8 oder 9, wobei das zweite Dichtungselement (40) als Dichtungsring ausgebildet ist.

11. Verfahren zum Abdichten eines Verbinders (100), umfassend:
- Aufnehmen eines Kabelendes (200) in einer Kabeldurchführung (10), wobei an der Kabeldurchführung (10) eine Mehrzahl von relativ zum Kabelende (200) bewegbaren Druckelementen (11) angeordnet ist;
- Anordnen eines ersten Dichtungselements (20) zumindest teilweise zwischen dem Kabelende (200) und der Kabeldurchführung (10),
wobei ein Innendurchmesser des ersten Dichtungselements (20) sich zumindest abschnittsweise in Kabelführungsrichtung (K) verkleinert, wenn die Mehrzahl von Druckelementen nicht in die Befestigungsposition bewegt ist,
wobei die Kabelführungsrichtung (K) einer Richtung entspricht, in welcher sich der Verbinder ausgehend von der Kabeldurchführung (10) in Richtung eines Verbindungsbereichs des Verbinders erstreckt,
wobei die Mehrzahl von bewegbaren Druckelementen (11) in eine Befestigungsposition bewegbar ist, in der die Innenseite des ersten Dichtungselements (20) von der Mehrzahl von Druckelementen (11) flächig an die Außenseite des Kabelendes (200) gedrückt ist; und
- Bewegen der Mehrzahl von bewegbaren Druckelementen (11) hin zum Kabelende (200) derart, dass die Innenseite des ersten Dichtungselements (10) an dem oder den Abschnitten mit verbreitertem Innendurchmesser hin zum Kabelende gedrückt wird.

## Claims

1. A connector (100), in particular a push-pull connector, comprising:
- a cable feedthrough or cable bushing (10) for receiving a cable end (200); and
- a first sealing member (20) arranged at least partially between the cable end (200) and the cable bushing (10),
wherein a plurality of pressure elements (11) movable relative to the cable end (200) is arranged at the cable bushing (10), and is movable into a fastening position in which the inner side of the first sealing element (20) is pressed flatly against the outer side of the cable end (200) by the plurality of pressure elements (11), and
wherein an inner diameter of the first sealing element (20) decreases at least in sections in the cable guiding direction (K) when the plurality of pressure elements is not moved to the fastening position, and wherein the cable guiding direction (K) corresponds to a direction in which the connector extends starting from the cable bushing (10) toward a connecting region of the connector,
wherein, when assuming the fastening position by moving the movable pressing members (11) toward the cable end, the inner side of the first sealing member (20) at the section or sections with widened inner diameter can be pressed toward the cable end (200).

2. The connector (100) according to claim 1, further comprising a securing member (30) for moving the plurality of pressing members (11) into the fastening position.

3. The connector (100) according to claim 2, wherein the securing element (30) is connectable to the connector (100), such that the plurality of pressing elements (11) are moved into the fastening position.

4. The connector (100) according to any one of the preceding claims, wherein the first sealing element (20) has a protrusion (21) and the protrusion (21) engages a complementary recess (13) of the plurality of movable pressure elements (11).

5. The connector (100) according to any one of the preceding claims, wherein the first sealing element (20) is formed to be at least 5 mm long around a part of the cable end (200) in a cable guiding direction (K) in which the cable end (200) is guided through the cable bushing (10).

6. The connector (100) according to any one of the preceding claims, wherein the cable bushing (10) has a constriction (14) and wherein the first sealing element (20) is arranged at the constriction (14).

7. The connector (100) according to any one of the preceding claims, wherein the plurality of pressure elements (11) takes a claw-like form and extends in a direction opposite to the cable routing direction (K) starting from the cable bushing (10).

8. The connector (100) according to any one of the preceding claims, further comprising:
- a housing (50), wherein the cable bushing (10) is arranged within the housing (50); and
- a second sealing member (40) arranged between the cable bushing (10) and the housing (50).

9. The connector (100) according to claim 8, wherein the cable bushing has a circumferential recess (15), and
wherein the second sealing element (40) is arranged in the circumferential recess (15) of the cable bushing (10).

10. The connector (100) according to claim 8 or 9, wherein the second sealing element (40) is formed as a sealing ring.

11. A method for sealing a connector (100), comprising:
- receiving a cable end (200) in a cable bushing (10), wherein a plurality of pressure elements (11) movable relative to the cable end (200) are arranged at the cable bushing (10);
- arranging a first sealing element (20) at least partially between the cable end (200) and the cable bushing (10),
wherein an inner diameter of the first sealing element (20) decreases at least in sections in the cable guiding direction (K) when the plurality of pressure elements is not moved to the fastening position,
wherein the cable guiding direction (K) corresponds to a direction in which the connector extends starting from the cable bushing (10) toward a connecting region of the connector,
wherein the plurality of movable pressing members (11) is movable to a fastening position in which the inner side of the first sealing member (20) is flatly pressed against the outside of the cable end (200) by the plurality of pressing members (11); and
- moving the plurality of movable pressing members (11) toward the cable end (200) such that the inner side of the first sealing member (10) is pressed toward the cable end at the section or sections with widened inner diameter.

## Revendications

1. Un connecteur (100), notamment un connecteur push-pull, comprenant :
- un passage de câble (10) pour recevoir une extrémité de câble (200) ; et
- un premier élément d'étanchéité (20), qui est disposé au moins partiellement entre l'extrémité de câble (200) et le passage de câble (10),
sachant qu'une pluralité d'éléments de pression (11) mobiles par rapport à l'extrémité de câble (200) est agencée auprès du passage de câble (10) et peut être déplacée dans une position de fixation dans laquelle la face intérieure du premier élément d'étanchéité (20) est pressée à plat par la pluralité d'éléments de pression (11) contre le côté extérieur de l'extrémité de câble (200), et
sachant qu'un diamètre intérieur du premier élément d'étanchéité (20) se réduit au moins par sections dans la direction de guidage de câble (K) lorsque la pluralité d'éléments de pression n'est pas déplacée dans la position de fixation, et sachant que la direction de guidage de câble (K) correspond à une direction dans laquelle le connecteur s'étend à partir du passage de câble (10) en direction d'une zone de connexion du connecteur,
sachant que, lors de l'adoption de la position de fixation par le déplacement des éléments de pression mobiles (11) vers l'extrémité du câble, la face intérieure du premier élément d'étanchéité (20) peut être pressée vers l'extrémité du câble (200) au niveau de la ou des parties présentant un diamètre intérieur élargi.

2. Le connecteur (100) d'après la revendication 1, comprenant en outre un élément de sécurité (30) pour déplacer la pluralité d'éléments de pression (11) vers la position de fixation.

3. Le connecteur (100) d'après la revendication 2, sachant que l'élément de sécurité (30) peut être connecté au connecteur (100) de manière à déplacer la pluralité d'éléments de pression (11) vers la position de fixation.

4. Le connecteur (100) d'après l'une quelconque des revendications précédentes, sachant que le premier élément d'étanchéité (20) comprend une saillie (21), et que la saillie (21) s'engage dans un évidement complémentaire (13) de la pluralité d'éléments de pression mobiles (11).

5. Le connecteur (100) d'après l'une quelconque des revendications précédentes, sachant que le premier élément d'étanchéité (20) est formé avec une longueur d'au moins 5 mm autour d'une partie de l'extrémité de câble (200) dans une direction de guidage de câble (K) dans laquelle l'extrémité de câble (200) est guidée à travers le passage de câble (10).

6. Le connecteur (100) d'après l'une quelconque des revendications précédentes, sachant que le passage de câble (10) présente une constriction (14) et sachant que le premier élément d'étanchéité (20) est disposé au niveau de la constriction (14).

7. Le connecteur (100) d'après l'une quelconque des revendications précédentes, sachant que la pluralité d'éléments de pression (11) est en forme de griffe et s'étend à partir du passage de câble (10) dans la direction opposée à la direction de guidage de câble (K).

8. Le connecteur (100) d'après l'une quelconque des revendications précédentes, comprenant en outre :
- un boîtier (50), le passage de câble (10) étant agencée à l'intérieur du boîtier (50) ; et
- un deuxième élément d'étanchéité (40) agencé entre le passage de câble (10) et le boîtier (50).

9. Le connecteur (100) d'après la revendication 8, sachant que le passage de câble présente un évidement circonférentiel (15), et
sachant que le deuxième élément d'étanchéité (40) est agencé dans l'évidement circonférentiel (15) du passage de câble (10).

10. Le connecteur (100) d'après la revendication 8 ou 9, sachant que le deuxième élément d'étanchéité (40) est réalisé sous la forme d'une bague d'étanchéité.

11. Un procédé d'étanchéification d'un connecteur (100), comprenant le fait de :
- recevoir une extrémité de câble (200) dans un passage de câble (10), sachant qu'une pluralité d'éléments de pression (11) mobile par rapport à l'extrémité de câble (200) est agencée auprès du passage de câble (10) ;
- agencer un premier élément d'étanchéité (20) au moins partiellement entre l'extrémité de câble (200) et le passage de câble (10),
sachant qu'un diamètre intérieur du premier élément d'étanchéité (20) se réduit au moins par sections dans la direction de guidage de câble (K), lorsque la pluralité d'éléments de pression n'est pas déplacée dans la position de fixation,
sachant que la direction de guidage de câble (K) correspond à une direction dans laquelle le connecteur s'étend à partir du passage de câble (10) vers une zone de connexion du connecteur,
sachant que la pluralité d'éléments de pression mobiles (11) est déplaçable dans une position de fixation dans laquelle la face intérieure du premier élément d'étanchéité (20) est pressée à plat contre la face extérieure de l'extrémité de câble (200) par la pluralité d'éléments de pression (11) ; et de
- déplacer la pluralité d'éléments de pression mobiles (11) vers l'extrémité de câble (200) de manière que la face intérieure du premier élément d'étanchéité (10) soit pressée vers l'extrémité de câble au niveau de la ou des parties présentant un diamètre intérieur élargi.
